# EUROPÄISCHE PATENTSCHRIFT

(11) **EP 0 803 047 B1**
(45) Veröffentlichungstag und Bekanntmachung des Hinweises auf die Patenterteilung: **26.09.2001**
(21) Anmeldenummer: 95942037.3
(22) Anmeldetag: 22.12.1995
(51) Int. Cl.: G01D 3/028, G01D 5/20

(54) **WEGGEBER**
TRAVEL SENSOR
CAPTEUR DE DEPLACEMENT

(30) Priorität: 14.01.1995 DE 19500982
(43) Veröffentlichungstag der Anmeldung: 29.10.1997
(73) Patentinhaber: ROBERT BOSCH GMBH, 70442 Stuttgart (DE)
(72) Erfinder: HEIZMANN, Klaus, D-71229 Leonberg (DE); SCHNEIDER, Norbert, D-75233 Tiefenbronn (DE); ROETHER, Friedbert, D-74389 Cleebronn (DE)
(86) Internationale Anmeldenummer: DE9501842
(87) Internationale Veröffentlichungsnummer: WO9621841

(56) Entgegenhaltungen:
- EP-A- 0 317 497
- DE-A- 3 109 930
- FR-A- 2 664 045
- US-A- 3 891 918

## Beschreibung

### Stand der Technik

Die Erfindung geht aus von einem Weggeber wie er zum Beispiel aus der DE-OS 31 09 930.0 bekannt ist. Dort ist ein Weggeber beschrieben, bei dem der Stabkern mit der Meßspule in eine in einem Rohr angebrachte Hülse aus Messing taucht. Die Frequenz des durch die Spule fließenden Wechselstroms ist so abgestimmt, daß sich die Wirbelströme nur in der Messingoberfläche ausbilden. Das hier verwendete sogenannte Wirbelstromprinzip weist zwar eine geringe Temperaturabhängigkeit auf. Aber bei unterschiedlichen Temperaturen ergibt sich eine von der Eindringtiefe des Tauchkörpers in die Meßspule abhängige Temperaturdrift. Diese Temperaturdrift kann in einer elektrischen Auswerteschaltung nur schwer und aufwendig kompensiert werden.

Auch bei dem aus der DE-OS 40 20 369.7 bekannten induktiven Weggeber wird ein Tauchkörper in einer Meßspule bewegt. Hierbei besteht der Tauchkörper aus einer Schicht aus ferromagnetischem und einer Schicht aus elektrisch gut leitendem aber nicht ferromagnetischem Material. In der Praxis ist es aber sehr schwierig, diese beiden Schichten sowohl aufzubringen, als auch gegenseitig abzustimmen, um eine Temperaturdrift zu vermeiden. Dadurch baut dieser Weggeber sehr aufwendig, kompliziert und relativ teuer.

In der US-A-38 91 918 wird eine Meßvorrichtung beschrieben, bei der ein Tauchkörper in eine von einer Spule umgebene Hülse eintaucht. Das Meßsignal soll möglichst linear zur Eindringtiefe verlaufen. Insbesondere in den Randbereichen ergeben sich hierbei Abweichungen, die durch besondere Anordnungen kompensiert werden können. Auf eine Kompensation eines durch Temperaturschwankungen hervorgerufenen Meßfehlers wird nicht eingegangen.

Ferner wird in der EP-A-0 317 497 ein Tauchkörper beschrieben, bei dem der Kern aus einem Stift aus ferromagnetischem Material und aus einer Hülse aus gut elektrisch leitendem aber nicht ferromagnetischem Material besteht. Durch gemeinsames Einführen dieser beiden Materialien in die Meßspule wird eine Kompensation eines Meßfehlers ermöglicht. Es sind aber keine Hinweise entnehmbar, daß auf der Außenseite der Spule befindliche Abschirmhülsen einen Einfluß auf eine Meßfehlerkompensation haben könnten.

Der Erfindung liegt die Aufgabe zugrunde, bei einem Weggeber mit relativ geringem Aufwand den Temperatureinfluß auf das Meßsignal annähernd über den gesamten Meßbereich zu kompensieren. Diese Aufgabe wird durch die Merkmale des unabhängigen Anspruchs gelöst.

### Vorteile der Erfindung

Der erfindungsgemäße Weggeber mit den Merkmalen des Hauptanspruchs hat demgegenüber den Vorteil, daß die bei unterschiedlichen Temperaturen ermittelten Meßkurven nahezu parallel über den gesamten Meßbereich verlaufen. Der Temperaturgang ist somit über den gesamten Meßbereich nahezu konstant und kann in einfacher Weise in einer elektrischen Auswerteschaltung berücksichtigt werden. Bekanntlich kann die Veränderung des Offsets der Meßkurve, d.h. z. B. die Verschiebung des Nullpunkts relativ leicht mit Hilfe einer elektrischen Auswerteschaltung kompensiert werden. Bei Verwendung einer Abschirmhülse aus ferromagnetischem Material können elektromagnetische Streufelder abgeschirmt werden, die zum Beispiel durch in der Nähe des Weggebers befindliche Elektromagnete hervorgerufen werden können. Die ferromagnetischen Eigenschaften der Hülse wirken sich dabei nur geringfügig auf die Induktivität der stromdurchflossenen Spule aus, da die Feldlinien des Magnetfelds der Spule auf ihrem Weg in der Hülse konzentriert werden. Der magnetische Fluß ist damit unabhängig von der sonstigen Geometrie des Weggebers oder eventuellen äußeren Störfeldern.

Die Herstellung des Weggebers ist besonders einfach, da nur noch die Dicken des Tauchkörpers undder äußeren Hülse und die Frequenz aufeinander abgestimmt zu werden brauchen.

Durch die in den Unteransprüchen aufgeführten Maßnahmen sind vorteilhafte Weiterbildungen und Verbesserungen des im Hauptanspruch angegebenen Weggebers möglich.

### Zeichnung

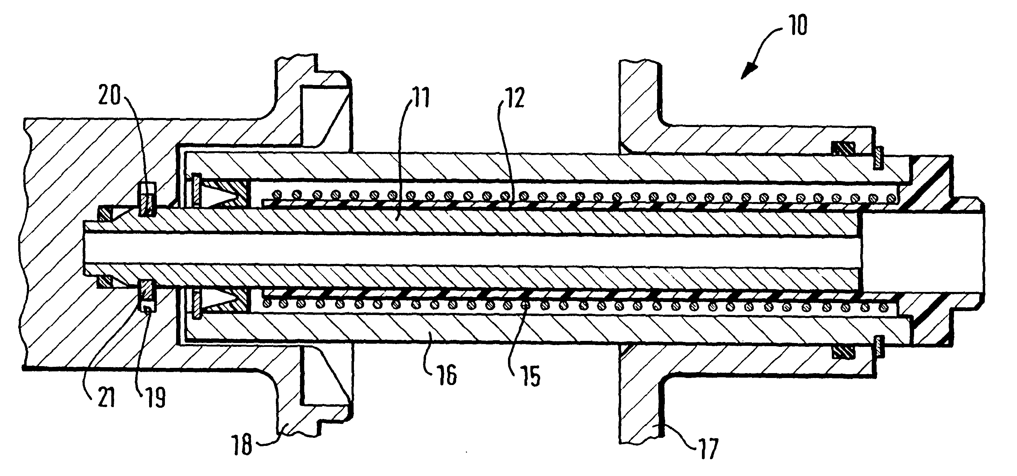

Ein Ausführungsbeispiel der Erfindung ist in der Zeichnung dargestellt und in der nachfolgenden Beschreibung näher erläutert. Die einzige Figur zeigt ein Schnittbild durch einen Weggeber.

### Beschreibung des Ausführungsbeispiels

In der Figur ist mit 10 ein Weggeber bezeichnet, dessen Tauchkörper 11 in einem Spulenkörper 12 aus elektrisch schlecht leitendem und nicht ferromagnetischem Material, zum Beispiel Kunststoff oder austenitischer Stahl nahezu reibungsfrei geführt wird. Der Tauchkörper 11 besteht aus einem Rohr aus elektrisch gut leitfähigem aber nicht ferromagnetischem Material, zum Beispiel Aluminium. Die Eintauchtiefe des Tauchkörpers 11 in den Spulenkörper 12 entspricht dabei dem zu messenden Weg. In der Figur ist der Tauchkörper 11 in völlig eingetauchtem Zustand dargestellt. Auf dem Spulenkörper 12, d.h. auf der dem Tauchkörper 11 abgewandten Seite ist eine Meßspule 15 aufgewickelt. Diese Meßspule 15 kann mehrlagig gewickelt sein. Über die Meßspule 15 ist eine Abschirmhülse 16 angeordnet. Die Abschirmhülse 16 besteht aus ferromagnetischem Material. Zusätzlich zu den bisherigen Aufgaben, wie zum Beispiel die Meßspule 15 vor Verschmutzung durch Umwelteinflüsse und vor äußeren elektromagnetischen Feldern zu schützen, dient die Abschirmhülse 16 auch mit dazu, ein Meßsignal zu beeinflussen. Die Abschirmhülse 16 ragt in zwei Gehäuseteile 17, 18, deren Abstand, bzw. deren relative Abstandsänderung zueinander bestimmt werden soll. Das eine Gehäuseteil 17 ist ortsfest angeordnet und mit Hilfe von flanschartigen Fortsätzen auf der Abschirmhülse 16 befestigt. Der andere Gehäuseteil 18 ist beweglich, aber fest mit dem Tauchkörper 11 verbunden. Hierzu ist im Gehäuseteil 18 und im Tauchkörper 11 je eine Ringnut 19 bzw. 20 ausgebildet, in die ein Haltering 21 eingreift. Der Tauchkörper 11 wird dadurch entsprechend der Verschiebung des Gehäuseteils 18 mitbewegt. Der Weggeber 10 kann bei einem pneumatischen oder hydraulischen Element verwendet werden, wobei der Tauchkörper 11 dann die Kolbenstange des Kolbens und der Spulenkörper als Hydraulikzylinder ausgebildet sind. Seine Anwendung ist zum Beispiel bei einem Kupplungssteller denkbar.

Vorab werden die jeweiligen Meßeffekte erläutert, die jeweils später an der Hülse oder am Rohr auftreten würden, wenn das jeweilige andere Teil nicht vorhanden wäre. Wird die Spule 15 von einem Wechselstrom durchflossen und erfaßt das magnetische Wechselfeld der Spule nur ein elektrisch gut leitendes aber nicht ferromagnetisches Material, d.h. nur der Tauchkörper 11 würde vom magnetischen Wechselfeld der Spule 15 erfaßt, so wirkt nur der sog. Wirbelstromeffekt. Aufgrund der sich in dem elektrisch gut leitenden, aber nicht. ferromagnetischen Material ausbildenden Wirbelströme ergibt sich eine Verminderung der Induktivität der Meßspule 15, so daß die Höhe der anliegenden Meßspannung U abnimmt. Je weiter dabei das Material, d. h der Tauchkörper 11, in die Meßspule 15 eindringt, desto größer ist die Wirbelstromausbildung, da mehr Volumen hierzu zur Verfügung steht. Dabei würde man eine Meßkurve für die Meßspannung U über der Eintauchtiefe s mit einer negativen Steigung erhalten. Bei unterschiedlichen Temperaturen ist die Steigung der Meßkurve unterschiedlich. Der Einfluß der Temperatur über den gesamten Meßbereich ist aber unterschiedlich. Je weiter der Tauchkörper 11 in die Meßspule 15 eintaucht, desto größer sind die Abweichungen des Meßsignals von der Eichkurve. Dieser nun auftretende, durch die unterschiedliche Temperatur bewirkte Meßfehler ist nicht direkt proportional zur Eintauchtiefe s und kann somit in einer Auswerteschaltung nur schwer kompensiert werden.

Im folgenden wird nun die Wirkung des magnetischen Feldes der von einem Wechselstrom durchflossenen Spule auf das ihr gegenüberliegende ferromagnetische Material, d. h. auf die Abschirmhülse 16, beschrieben. Bei dieser Wechselwirkung beruht die Meßsignalausbildung auf dem sog. ferromagnetischen oder induktiven Effekt. Das magnetische Wechselfeld der von dem Wechselstrom durchflossenen Spulen erfaßt die Oberfläche des ferromagnetischen Materials. Es sei darauf hingewiesen, daß bei ferromagnetischem Material sowohl der ferromagnetische Effekt als auch der Wirbelstromeffekt wirkt. Während der Wirbelstromeffekt eine Verminderung der Induktivität der Meßspule hervorruft, bewirkt der ferromagnetische Effekt eine Erhöhung der Induktivität der Spule. Welcher von beiden Effekten überwiegt, ist primär von der Frequenz des Wechselstroms, der die Spule 15 durchfließt, abhängig. Nun ist die Permeabilität eines ferromagnetischen Materials zwar temperaturabhängig, aber die Beeinflussung der Induktivität der Spule ist nur gering. Sie beruht auf der Anordnung der Abschirmhülse 16 gegenüber der Spule. Die Temperaturabhängigkeit des spezifischen Widerstands der ferromagnetischen Abschirmhülse 16 wirkt sich ebenfalls auf die Induktivität der Spule aus.

Um nun die Empfindlichkeit des Temperaturgangs des induktiven Weggebers zu optimieren, muß die Temperaturabhängigkeit der Wirbelströme, welche durch den Tauchkörper 11 aus elektrisch leitendem, aber nicht ferromagnetischem Material hervorgerufen werden, einen der Abschirmhülse 16 aus ferromagnetischem Material entgegenlaufenden Effekt verursachen. In Abhängigkeit von der Frequenz des Wechselstroms, die durch die Spule 15 fließen und der elektrischen Leitfähigkeit des Materials des Tauchkörpers 11 variiert die Eindringtiefe der Wirbelströme (Skineffekt) in die Oberfläche des Tauchkörpers 11. Bei dem gewählten niedrigen Frequenzbereich von 5 bis 20 kHz, wird nun nicht nur die Oberfläche von den Wirbelströmen durchdrungen, sondern das gesamte Volumen des Tauchkörpers 11 ist maßgebend. Die Volumenvariation läßt sich dadurch erreichen, indem man die Wandstärke bei einem Rohr bzw. den Durchmesser bei einem Vollkörper entsprechend wählt. Da die Frequenz des Wechselstroms konstant gehalten wird, sind die entstehenden Wirbelströme neben der Eindringtiefe des Tauchkörpers nur von der elektrischen Leitfähigkeit des Materials des Tauchkörpers 11 abhängig. Die Wanddicke, das heißt das Volumen des Tauchkörpers 11 muß nun so gewählt werden, daß die Änderung des elektrischen Widerstands, welche den Stromfluß der Wirbelströme bestimmt, dem Temperatureffekt, der im ferromagnetischen Material der Abschirmhülse 16 hervorgerufen wird, entgegenwirkt. Bei einer Frequenz des Wechselstroms von 8 bis 15 kHz bewegt sich die Dicke der Abschirmhülse 16 von 2 bis 5 mm. Ist der Tauchkörper 11 als Hülse ausgebildet, so weist die Hülse 16 eine Wanddicke von 1,8 bis 5 mm auf. Bei Verwendung eines Vollkörpers für den Tauchkörper 11 wären diese Angaben entsprechend umzuwandeln. Besonders vorteilhaft erweist es sich, eine Hülse 16 aus Stahl mit einer Dicke von 3 mm, einem hülsenförmigen Tauchkörper 11 mit einer Wanddicke von 2,5 mm aus Aluminium bei einer Frequenz des Wechselstroms von 11,6 kHz zu verwenden. Aufgrund dieser Abstimmung sind die jeweiligen Meßkurven bei unterschiedlichen Temperaturen parallel verlaufend.

## Patentansprüche

1. Weggeber (10) mit mindestens einer von einem Wechselstrom durchflossenen Meßspule (15), die relativ zu einem Körper (11) bewegt wird und deren abhängig von der Eintauchtiefe (s) des Körpers (11) in die Meßspule (15) bewirkte Dämpfung als Meßsignal (U) ausgewertet wird, wobei die Meßspule (15) von einer Abschirmhülse (16) umgeben ist, die aus ferromagnetischem Material besteht und wobei der Körper (11) aus elektrisch gut leitendem, aber nicht ferromagnetischem Material besteht und wobei bei einer fest vorgegebenen Frequenz des Wechselstroms die Wanddicke der Abschirmhülse (16) und das Volumen des Körpers (11) so aufeinander abgestimmt sind, daß die in den beiden Materialien aufgrund des magnetischen Wechselfelds der von Wechselstrom durchflossenen Spule auftretenden, unterschiedlichen Effekte so aufeinander einwirken, daß der Temperatureinfluß auf das Meßsignal (U) annähernd über den gesamten Meßbereich kompensierbar ist.

2. Weggeber nach Anspruch 1, **dadurch gekennzeichnet, daß** die Abschirmhülse (16) eine Wanddicke von 2 bis 5 mm hat, daß der Körper (11) als Hülse ausgebildet ist, eine Wanddicke von 1,8 bis 5 mm hat und daß die Frequenz des Wechselstroms 8 bis 15 kHz beträgt.

3. Weggeber nach Anspruch 1 und/oder 2, **dadurch gekennzeichnet, daß** die Abschirmhülse (16) eine Wanddicke von 3 mm hat und aus Stahl besteht, daß der Körper (11) als Hülse ausgebildet ist, eine Wanddicke von 2,5 mm hat und aus Aluminium besteht, und daß die Frequenz des Wechselstroms 11,6 kHz beträgt.

4. Weggeber nach einem der Ansprüche 1 bis 3, **dadurch gekennzeichnet, daß** die Meßspule (15) auf einem Spulenkörper (12) aus elektrisch schlecht leitendem und nicht ferromagnetischem Material angeordnet ist.

## Claims

1. Displacement sensor (10) having at least one measuring coil (15), through which an alternating current flows, which is moved relative to a body (11) and whose attenuation, effected as a function of the depth (s) to which the body (11) descends into the measuring coil (15), is evaluated as measurement signal (U), the measuring coil (15) being surrounded by a screening sleeve (16) composed of ferromagnetic material, and the body (11) being composed of material which is readily electrically conductive but is not ferromagnetic, and, given a fixedly predetermined frequency of the alternating current, the wall thickness of the screening sleeve (16) and the volume of the body (11) being coordinated with one another in such a way that the different effects occurring in the two materials on account of the alternating magnetic field of the coil through which alternating current flows act on one another in such a way that the temperature influence on the measurement signal (U) can be compensated approximately over the entire measurement range.

2. Displacement sensor according to Claim 1, **characterized in that** the screening sleeve (16) has a wall thickness of from 2 to 5 mm, in that the body (11) is designed as a sleeve and has a wall thickness of from 1.8 to 5 mm, and in that the frequency of the alternating current is from 8 to 15 kHz.

3. Displacement sensor according to Claim 1 and/or 2, **characterized in that** the screening sleeve (16) has a wall thickness of 3 mm and is composed of steel, in that the body (11) is designed as a sleeve, has a wall thickness of 2.5 mm and is composed of aluminium, and in that the frequency of the alternating current is 11.6 kHz.

4. Displacement sensor according to one of Claims 1 to 3, **characterized in that** the measuring coil (15) is arranged on a coil former (12) made of material which is poorly electrically conductive and is not ferromagnetic.

## Revendications

1. Capteur de déplacement (10) dans lequel
- au moins une bobine de mesure (15) traversée par un courant alternatif, peut se déplacer par rapport à un corps (11), et l'amortissement qui se produit en fonction de la profondeur d'enfoncement (5) du corps (11) dans la bobine de mesure (15) est valorisé comme signal de mesure (U),
- la bobine de mesure (15) est entourée d'une douille-écran (16) faite d'un matériau ferromagnétique, tandis que le corps (11) est fait d'un matériau bon conducteur de l'électricité, mais non ferromagnétique,
- à une fréquence du courant alternatif, fixée à l'avance, l'épaisseur de la paroi de la douille-écran (16) et le volume du corps (11) sont accordés entre eux de manière que les effets différents créés dans les deux matériaux par le champ magnétique alternatif du courant traversant la bobine, interagissent de sorte que l'influence de la température sur le signal de mesure (U) peut être compensée pratiquement sur l'ensemble de la plage de mesure.

2. Capteur de déplacement selon la revendication 1,
**caractérisé en ce que**
la douille-écran (16) a une épaisseur allant de 2 à 5 mm, le corps (11) a la forme d'une douille dont la paroi a une épaisseur allant de 1,8 à 5 mm, et la fréquence du courant alternatif va de 8 à 15 kHz.

3. Capteur de déplacement selon l'une quelconque des revendications 1 et/ou 2,
**caractérisée en ce que**
la douille-écran (16) a une épaisseur de paroi de 3 mm et est en acier, le corps (11), en forme de douille, a une épaisseur de paroi de 2,5 mm et est en aluminium, et la fréquence du courant alternatif est de 11,6 kHz.

4. Capteur de déplacement selon l'une quelconque des revendications 1 à 3,
**caractérisé en ce que**
la bobine de mesure (15) est montée sur un corps de bobine (12) fait d'un matériau mauvais conducteur de l'électricité et non ferromagnétique.
